# EUROPEAN PATENT SPECIFICATION

(11) **EP 3 640 059 B1**
(45) Date of publication and mention of the grant of the patent: **17.05.2023**
(21) Application number: 19202436.2
(22) Date of filing: 10.10.2019
(51) Int. Cl.: B60C 11/24, B60C 23/04

(54) **TIRE INSPECTION SYSTEM FOR VEHICLE FLEETS**
REIFENINSPEKTIONSSYSTEM FÜR FAHRZEUGFLOTTEN
SYSTÈME D'INSPECTION DE PNEUMATIQUES POUR FLOTTES DE VÉHICULES

(30) Priority: 19.10.2018 US 201816164967
(43) Date of publication of application: 22.04.2020
(73) Proprietor: The Goodyear Tire & Rubber Company, Akron, OH 44316 (US)
(72) Inventor: WOFFORD-REDMOND, Jamie Lynn, Akron, OH 44305 (US); McINTOSH, Johnny Lee, Uniontown, OH 44685 (US); ROOT, Michele Lee, Medina, OH 44256 (US); WRIGHT, Joshua Kenneth, Macedonia, OH 44056 (US)
(74) Representative: Kutsch, Bernd

(56) References cited:
- EP-A1- 2 732 988
- EP-A1- 3 372 423
- US-A1- 2016 167 446

## Description

### Field of the invention

The invention relates to pneumatic tires for vehicles and the inspection of such tires in vehicle fleets. More particularly, the invention is directed to a system for the inspection of tires in a fleet of vehicles that includes real-time gathering of tire data and efficient management of data to provide an easily executed and rapid tire inspection with objective and consistent data. Moreover, the present invention is also drawn to a method of inspecting a tire of a vehicle in a fleet.

### Background of the invention

In the pneumatic tire art, tires are often employed on fleets of vehicles. Such fleets include commercial vehicles, such as tractor-trailers, heavy-duty trucks, dump trucks and the like, as well as lighter-duty trucks and automobiles. For the purpose of convenience, reference herein shall be made to the term vehicle with the understanding that such reference applies to commercial trucks, lighter-duty trucks and automobiles. A primary consideration for a fleet of vehicles is optimizing the amount of time that each vehicle is in service. To this end, it is desirable to inspect the tires of each vehicle to check tire pressure, tread depth and the general condition of each tire and ensure that the tire is ready for continued service.

Such inspection is often performed when respective vehicles of the fleet are parked in a lot or facility where a technician can inspect the tires. In the inspection process, one or more technicians move from vehicle to vehicle to check the pressure and tread depth of each tire, while also visually checking the appearance and overall condition of each tire. If any issues are discovered, such as a tire with tread depth below a minimum acceptable level or a pressure leak, the tire is designated for repair or replacement before the vehicle is returned to service. In addition, periodic reports of the condition of each tire enable data to be generated and analyzed that may enable central review of tire performance and/or a pro-active recommendation for repair and/or replacement, thereby minimizing potential downtime of the vehicle.

In the prior art, the above-described information for each tire was recorded by the technician on a sheet of paper. When central analysis was required, the paper records were brought to a data entry clerk, who transcribed the information into a computer system for sending to a manager or a data review service to generate recommendations regarding tires to be repaired or replaced. Such paper records allow for error in data transcription, undesirably leading to inconsistent results.

Systems have been developed in the prior art that include the use of electronic tools to measure tire pressure and gauge tread depth. However, certain data, such as an overall view of the tire, was described in writing by the technician, resulting in subjectivity in the evaluation of the tire. In addition, data regarding the overall fleet and each vehicle, as well as certain static data for each tire, must be entered repeatedly in such systems, which is inefficient and may lead to errors. Subjectivity in evaluation and repeated data entry may again undesirably lead to inconsistent results.

In addition, for a fleet of vehicles, large amounts of tire data are often analyzed to provide optimum recommendations for tire repair and/or replacement. When large amounts of data are analyzed, objectivity and consistency are important, as objectivity and consistency produce more accurate data, which in turn enables improved analysis and recommendations.

As a result, there is a need in the art for a system for the inspection of tires in a fleet of vehicles that includes real-time gathering of tire data and efficient management of data to provide an easily-executed and rapid tire inspection, and which also provides objective and consistent data.

EP 3 372 423 A1 describes a system comprising a tire sensor for measuring a tire pressure and an antenna for wireless communication. Furthermore, a mobile device such as a smartphone including a processor, memory and an antenna for wireless data transmission may be used to receive the measured tire pressure. The system also comprises a server remote from the mobile device, a first wireless transmission means to upload the measured tire pressure of the tire to the server, an analysis device in electronic communication with the server for analysis of the data uploaded from the data device, and a second wireless transmission means to communicate data sets from the server to the data device.

A further system for tire service life monitoring is described in US 2016/0167446 A1.

EP 2 732 988 A1 discloses a vehicle tire and brake inspection tool.

### Summary of the Invention

The invention relates to a system in accordance with claim 1 and to a method in accordance with claim 5.

Dependent claims refer to preferred embodiments of the invention.

According to an aspect of the invention, an inspection system for a tire of a vehicle in a fleet includes a portable inspection device that includes means for measuring a tire pressure, means for measuring a tread depth of the tire, and an antenna for wireless communication. A hand-held data device includes a processor, memory and an antenna for wireless data transmission, in which the data device receives the measured tire pressure and the measured tread depth of the tire from the portable inspection device. A server is remote from the data device and a first wireless transmission means is adapted to upload the measured tire pressure and the measured tread depth of the tire from the data device to the server. An analysis device is in electronic communication with the server for analysis of the data uploaded from the data device, and a second wireless transmission means communicates cloned data sets from the server to the data device.

In a preferred embodiment, the cloned data sets include at least one of fleet data, vehicle data and static tire data.

In another preferred embodiment, the data device includes at least one of data entry screens for manual entry of at least one of fleet data, vehicle data and static tire data; means for acquiring a tire identification code; and/or a camera to capture an image of at least one of a sidewall and a tread of the tire.

In another preferred embodiment, the second wireless transmission means is adapted to communicate at least one of recommendations and selected data sets generated by the analysis device from the server to at least one of a managerial device and the data device.

According to another aspect of the invention, a method for inspecting a tire of a vehicle in a fleet includes the step of determining if the inspection is a first inspection for the fleet. If the inspection is a first inspection for the fleet, fleet data is entered into a hand-held data device. It is also determined if the inspection is a first inspection for the vehicle. If the inspection is a first inspection for the vehicle, vehicle data is entered into the data device and static tire data is entered into the data device. If the inspection is not a first inspection for the fleet and the vehicle, previously-entered fleet data, vehicle data and static tire data is cloned on the data device. A tire representation is selected on the data device that corresponds to the tire to be inspected, and an inflation pressure and a tread depth of the tire to be inspected is measured with a portable inspection device. The measured inflation pressure and tread depth are transmitted from the portable inspection device to the data device. The measured inflation pressure and tread depth are correlated to the selected tire representation on the data device, and the fleet data, vehicle data, static tire data, the measured inflation pressure and the measured tread depth are transmitted to a remote server.

In a preferred embodiment, the step of cloning the previously-entered fleet data, vehicle data and static tire data includes transmitting the previously-entered fleet data, vehicle data and static tire data from the remote server to the data device.

In another preferred embodiment, the fleet data includes at least one of a geographic location, a street address, a fleet name, a fleet type and fleet contact information.

In still another preferred embodiment, the vehicle data includes at least one of a type of axles on the vehicle, a number of axles on the vehicle, a number of tires on each axle, a target inflation pressure for each tire, and a target tread depth for each tire.

In yet another preferred embodiment, the static tire data includes at least one of a tire type, tire size, a target tire inflation pressure, a tire valve type, and a tire identification code.

In still another preferred embodiment, the method further comprises the step of reviewing and adjusting the cloned data on the data device.

In still another preferred embodiment, the method further comprises capturing an image of at least one of a sidewall and the tread of the tire with a camera in the data device and correlating the image to the selected tire representation.

In still another preferred embodiment, the method further comprises one or more of the following steps:
repeating the measurement of inflation pressure and tread depth for each tire on the vehicle; locating the geographic position of the tire to be inspected with a global positioning system; and/or generating a work list from the tire inspection using the data device.

In still another preferred embodiment, the method comprises the step of analyzing the data transmitted to the remote server with an analysis device.

In still another preferred embodiment, the method further comprises the step of transmitting at least one of recommendations and selected data sets from the analysis device to the server and to at least one of a managerial device and the data device.

The features of the above embodiments and/or the below description may be combined with one another.

### Definitions

The following definitions are applicable to the present invention.

"Axial" and "axially" mean lines or directions that are parallel to the axis of rotation of the tire.

"Circumferential" means lines or directions extending along the perimeter of the surface of the annular tread perpendicular to the axial direction.

"Equatorial plane" means the plane perpendicular to the axis of rotation of the tire and passing through the center of the tire tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Inner" means toward the inside of the tire.

"Lateral" and "laterally" are used to indicate axial directions across the tread of the tire.

"Outboard side" means the side of the tire farthest away from the vehicle when the tire is mounted on a wheel and the wheel is mounted on the vehicle.

"Outer" means toward the outside of the tire.

"Radial" and "radially" are used to mean directions radially toward or away from the axis of rotation of the tire.

"Tread" means a molded rubber component which includes that portion of the tire that comes into contact with the road when the tire is normally inflated and under normal load.

### Brief Description of the Drawings

The invention will be described by way of example and with reference to the accompanying drawings, in which:
Figure 1 is a side elevational view of an exemplary vehicle for use with the tire inspection system of the present invention;
Figure 2 is a schematic diagram of an exemplary embodiment of the tire inspection system of the present invention;
Figure 3 is a flow diagram illustrating steps of the tire inspection system shown in Figure2;
Figure 4a is a schematic representation of a first display screen of a data device in a fleet data entry portion of the system shown in Figures 2 and 3;
Figure 4b is a schematic representation of a second display screen of a data device in a fleet data entry portion of the system shown in Figures 2 and 3;
Figure 4c is a schematic representation of a third display screen of a data device in a fleet data entry portion of the system shown in Figures 2 and 3;
Figure 5a is a schematic representation of a first display screen of a data device in a vehicle or unit data entry portion of the system shown in Figures 2 and 3;
Figure 5b is a schematic representation of a second display screen of a data device in a vehicle or unit data entry portion of the system shown in Figures 2 and 3;
Figure 6 is a schematic representation of a display screen of a data device in a cloning portion of the system shown in Figures 2 and 3;
Figure 7a is a schematic representation of a first display screen of a data device in a static tire data entry portion of the system shown in Figures 2 and 3;
Figure 7b is a schematic representation of a second display screen of a data device in a static tire data entry portion of the system shown in Figures 2 and 3; and
Figure 8 is a schematic representation of a display screen of a data device in a measured tire data entry portion of the system shown in Figures 2 and 3.

Similar numerals refer to similar parts throughout the drawings.

### Detailed Description of Embodiments of the invention

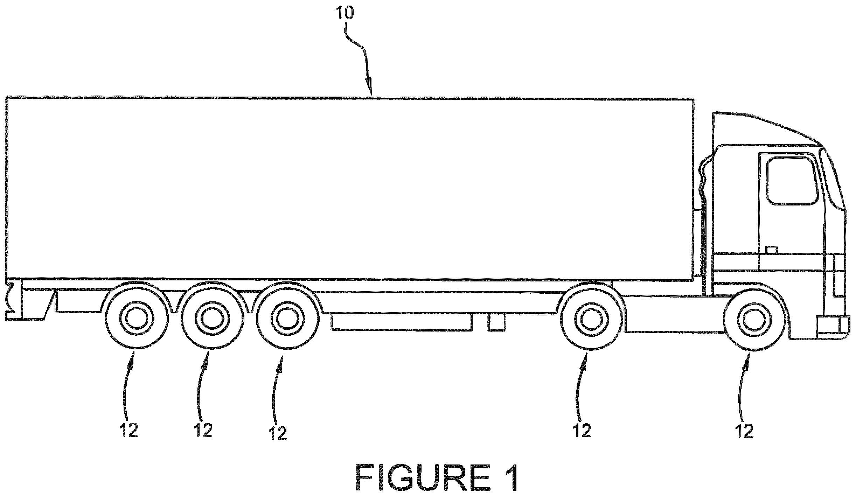

With reference to Figure 1, an exemplary vehicle 10 in a fleet for use with the tire inspection system of the present invention is shown. The vehicle 10 includes multiple tires 12, wherein multiple or each of them may be inspected, e.g. when the vehicle is parked in a fleet lot or facility.

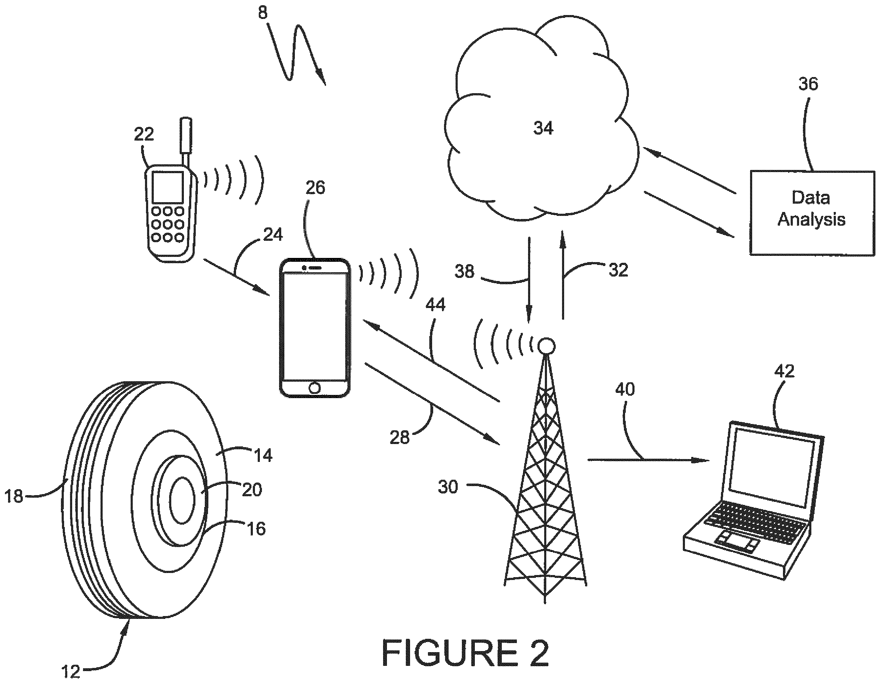

Turning now to Figure 2, each tire 12 includes a pair of sidewalls 14 (only one shown) extending from respective bead areas 16 (only one shown) to a groundengaging tread 18. The tire 12 is mounted on a wheel 20 as known to those skilled in the art and defines an internal cavity that is inflated with air. When the tire 12 is inspected, the depth of the tread 18 is checked by a technician to ensure that it is above a minimum level. If the depth of the tread 18 is below the minimum level, it is recommended that the tire 12 be replaced. The air pressure of the tire 12 is also checked to ensure that the pressure is at or near a recommended or target level. If the pressure is too far below the target level, the tire 12 may need to be repaired and/or replaced. Also, the overall condition of the tire 12 is reviewed by the technician to determine if any issues are present that may dictate repair and/or replacement of the tire, such as damage to one of the sidewalls 14 and/or the tread 18.

An exemplary embodiment of the tire inspection system or kit of the present invention is indicated at 8 and includes a portable inspection device 22 which may be carried by a technician to measure the pressure and tread depth of the tire 12. More particularly, the portable inspection device 22 can be a hand-held unit that preferably includes a chuck to engage a tire valve of the tire 12 to measure the tire pressure. The portable inspection device 22 may also include pins to measure the depth of grooves in the tread 18 and thus the tread depth through contact-based means, or optical or laser sensors to measure the depth of the tread grooves and thus the tread depth through non-contact means. Preferably, the portable inspection device 22 includes an antenna for wireless communication 24, such as Bluetooth communication, for instance to send the measured tire data of pressure and tread depth to a data device 26.

The data device 26 preferably is a programmable hand-held unit with a processor, memory and an antenna for wireless data transmission, and thus is capable of receiving, storing and transmitting data. Preferably, the data device 26 is a smartphone that includes a program, such as a computer application or app, which is configured to receive the measured tire data of pressure and tread depth from the portable inspection device 22 and other data to be described below. The data device 26 preferably receives the measured tire pressure and tread depth from the inspection device 22 and correlates the measured tire pressure and tread depth to a unique identification code for the tire 12 that is being inspected, which is known as a tire ID.

The data device 26 acquires the tire ID in any one of several ways. If the tire 12 is equipped with a radio frequency identification (RFID) tag, the data device 26 may scan the RFID tag to acquire the tire ID or may receive the tire ID from a separate scanning unit. When the tire 12 includes a bar code on a sidewall 14 instead of an RFID tag, the data device 26 scans or captures an image of the bar code. The bar code contains the tire ID and enables it to be uploaded to the data device 26. The tire sidewall 14 also includes a Department of Transportation (DOT) code, which includes information such as the manufacturing plant code, manufacture date, brand data, and the like. Thus, if the tire 12 does not include an RFID tag or a bar code, the DOT code may be entered into the data device 26 to enable the tire ID to be acquired by the device.

The data device 26 may also include a camera to capture an image of the tire 12 being inspected. An image may be required for each tire 12, or only when the technician believes there may be an issue or damage to a tire sidewall 14 and/or the tread 18. The image is acquired by the data device 26 for uploading with the measured data of pressure and tread depth, along with the tire ID.

The data acquired by the data device 26 may be uploaded by wireless transmission 28 to an antenna 30 for further transmission 32 to a central server 34, which preferably is a cloud-based server. The server 34 can receive the measured data of pressure and tread depth, as well as any image, for each respective tire 12 as correlated to the tire ID. In addition, other data to be described below if transmitted to the server 34 from the data device 26. The server 34 stores the data sent by the data device 26. Preferably and upon request, the server 34 communicates the data to a data analysis device 36, such as a third-party computer system, for analysis of the data sent by the data device 26. Once the data is analyzed, recommendations and/or selected data sets may be sent from the data analysis device 36 to the server 34. The server 34 optionally transmits the recommendations and/or selected data sets by wireless transmission 38 to the antenna 30, and by further wireless transmission 40 to a managerial device 42 for the fleet. Receipt of such information by the managerial device 42 enables any recommendations to be implemented, such as pro-active repair and/or replacement of certain tires 12.

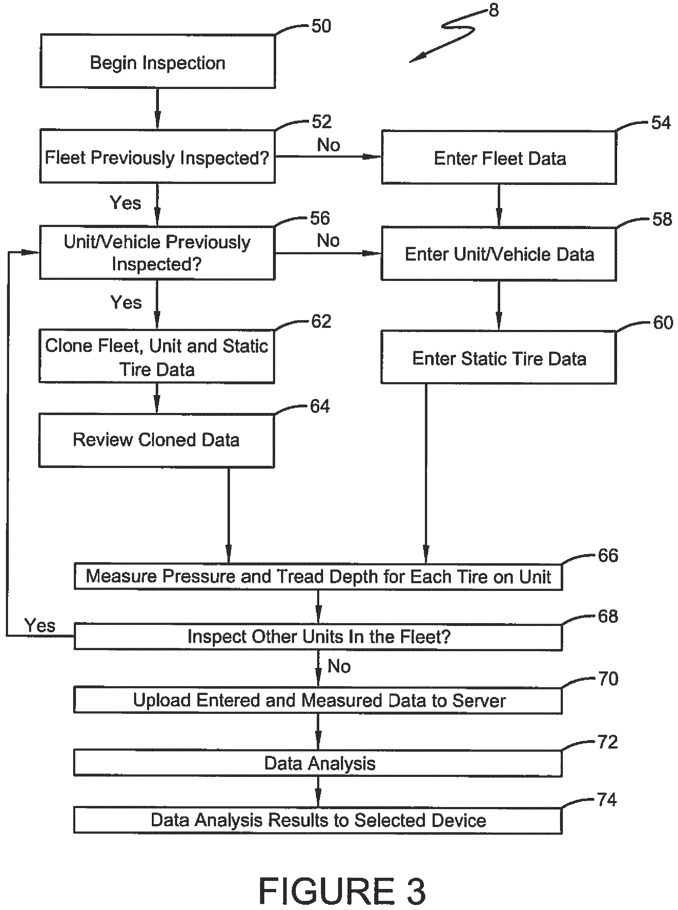

Selected data sets may also be wirelessly transmitted 44 to the data device 26 for cloning of data to provide an easy and rapid inspection with improved data accuracy and consistency. Referring now to Figure 3, steps of the exemplary embodiment of the tire inspection system 8 are shown. In step 50, the technician (or also in general the user) begins the inspection of the tires 12 of selected vehicles 10 (Figure 1). Using the data device 26 (Figure 2), the technician determines at step 52 if the inspection is a first inspection for this fleet, or if this fleet has been inspected before.

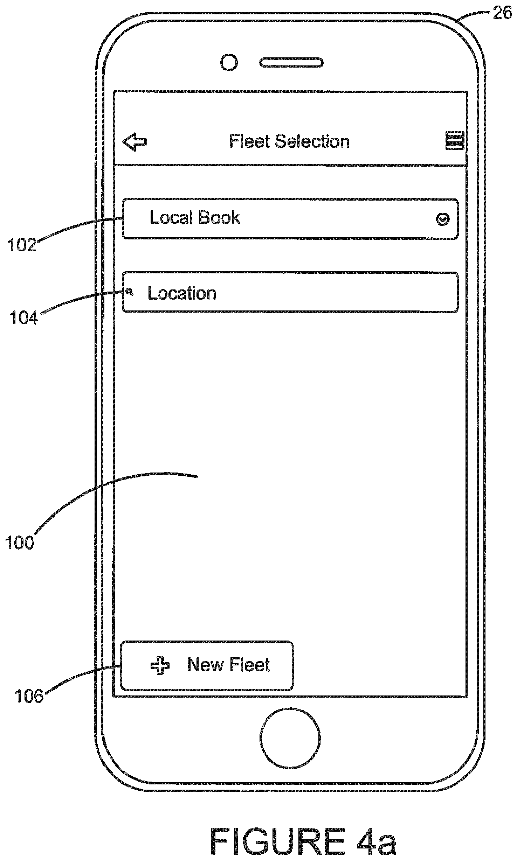

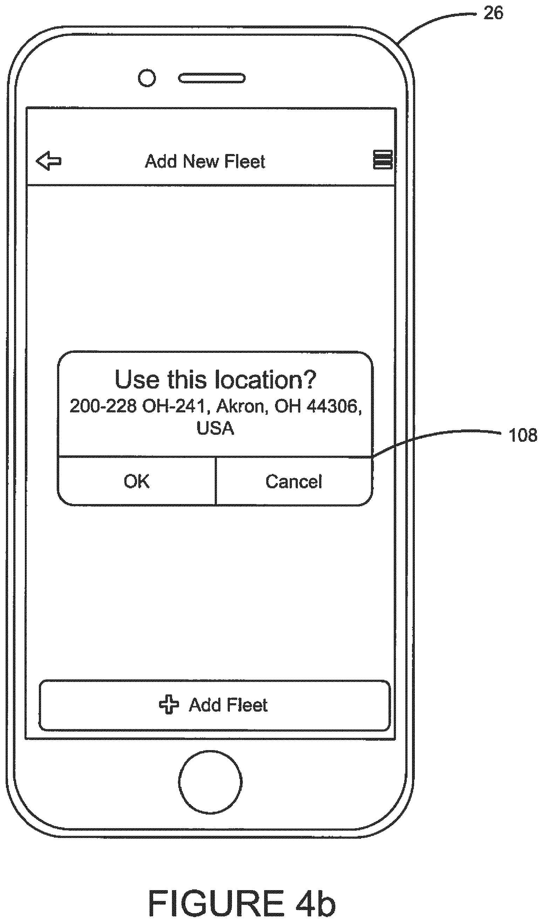

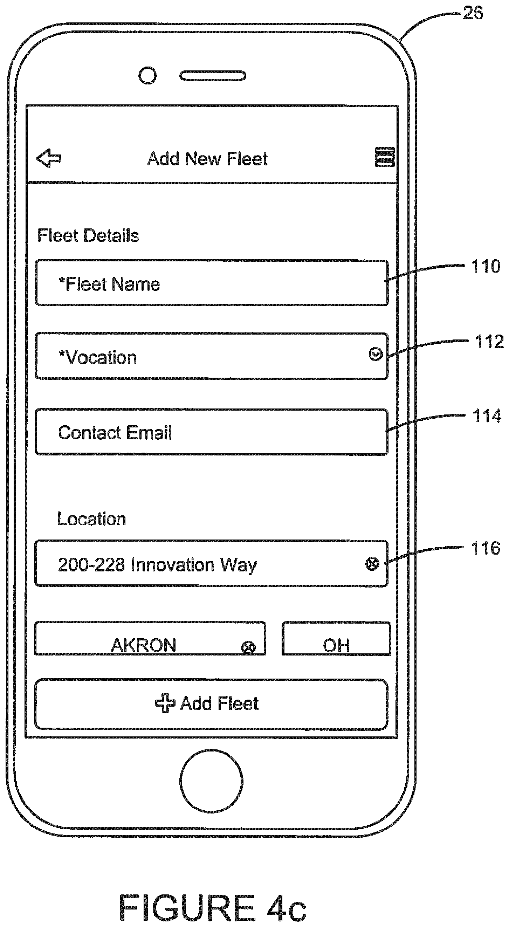

With additional reference to Figure 4a, if this fleet has been inspected before, the technician confirms on an initial fleet display screen 100 of the data device 26 a stored name 102 and/or location of the fleet lot 104. If this fleet has not been inspected before, the technician proceeds through a new fleet function 106 to a fleet data entry screen 108 on the data device 26, shown in Figure 4b. For entry of new fleet information, step 54 (Figure 3), the data device 26 preferably is equipped with a global positioning system (GPS). The GPS enables the geographic location of the technician in the lot 108 to be acquired and stored as an initial fleet location in the data device. The GPS location 108 may be converted to a street address 116 as shown in Figure 4c, and the technician may enter additional fleet-related data, such as a fleet name 110, vocation or type of fleet 112 and/or fleet contact information 114.

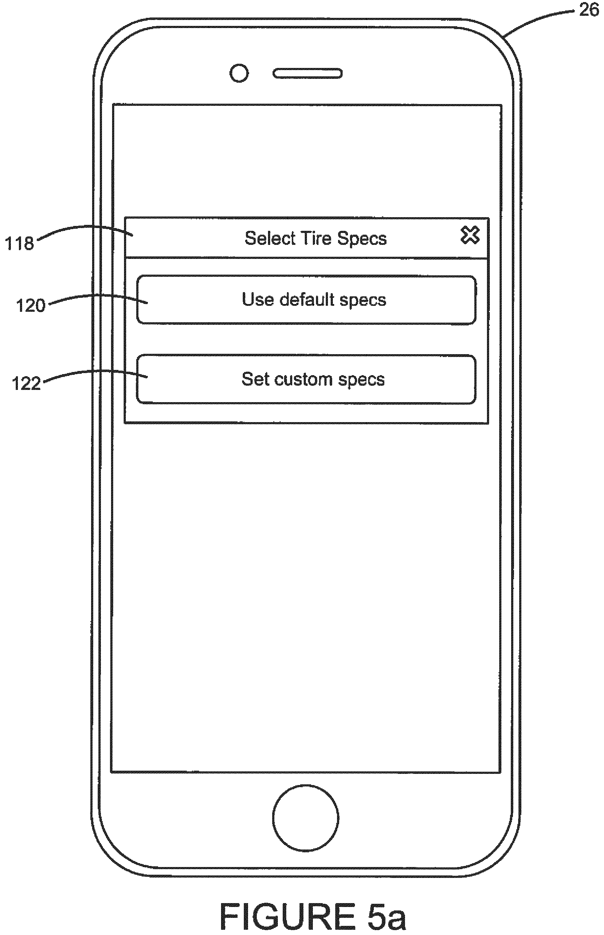

Because the data device 26 is in electronic communication with the server 34, the fleet data entered by the technician may be uploaded to the server and stored. As a result, new fleet data only needs to be created once. As mentioned above, if this fleet has been inspected before, the technician confirms on the initial fleet display screen 100 the stored name 102 and/or location of the fleet lot 104. At step 56 (Figure 3), when the technician confirms the stored name 102 and/or location of the fleet 104, the data device 26 recognizes the fleet information and proceeds to an initial vehicle or unit display screen 118 shown in Figure 5a.

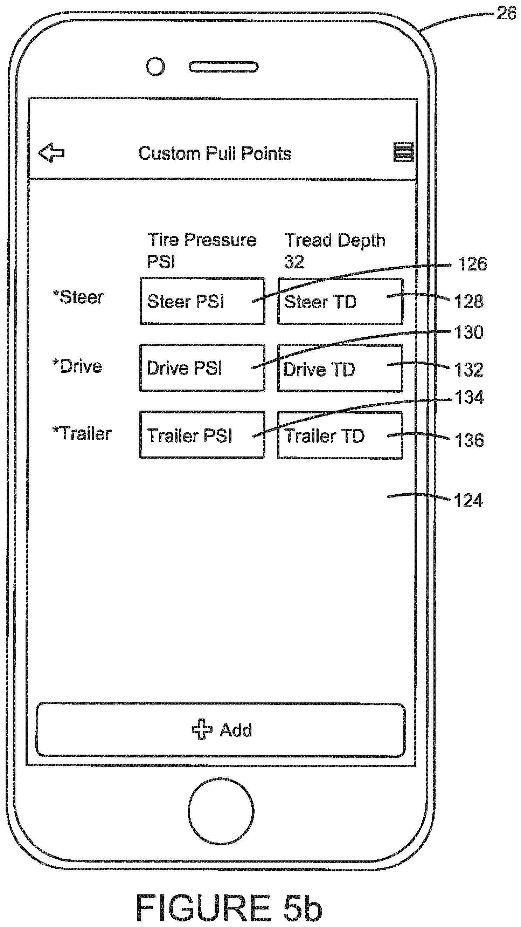

If this vehicle 10 has been inspected before, the technician confirms use of stored vehicle or unit data 120, as will be described in greater detail below. If this vehicle 10 has not been inspected before, the technician proceeds through a new or custom vehicle setup function 122 to a vehicle data entry screen 124, shown in Figure 5b. In the vehicle data entry screen 124, the technician may enter vehicle or unit data, step 58 (Figure 3), such as the configuration of the vehicle, including the type and number of axles and the number of tires on each axle, as well as target information for the particular vehicle configuration. For example, the configuration and target information may include a target tire pressure for tires on a steer axle 126, a target tread depth for tires on a steer axle 128, a target tire pressure for tires on a drive axle 130, a target tread depth for tires on a drive axle 132, a target tire pressure for tires on each trailer axle 134, and a target tread depth for tires on each trailer steer axle 136.

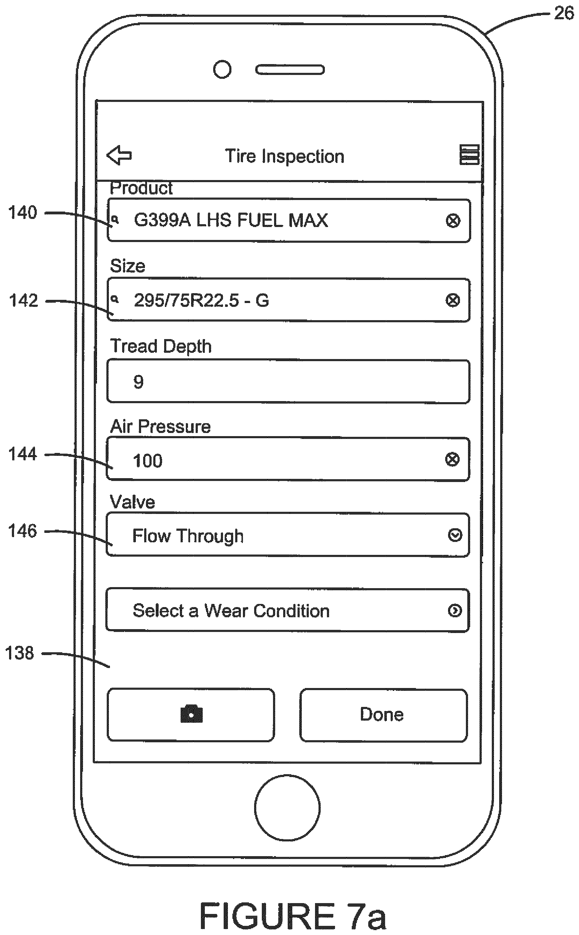

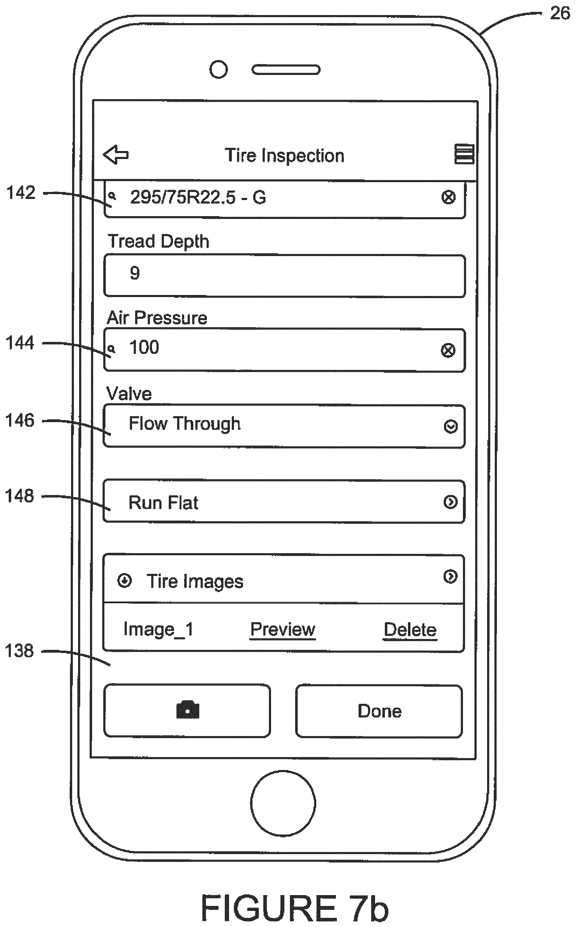

After entering the vehicle or unit data in step 58, the technician proceeds to enter static tire data using the data device 26, step 60 (Figure 3). As shown in Figures 7a and 7b, the static tire data is non-measured tire data and is entered using a static tire data entry screen 138 on the data device 26. The static tire data may include one or more of tire type 140, tire size 142, any target tire pressure 144 not entered in the vehicle or unit data entry described above, tire valve type 146 and any additional tire information 148 that may be helpful in analyzing the tire 12. In addition, the static tire data may include the tire ID, which the technician acquires with the data device 26 as described above.

If this fleet and this vehicle have been inspected before, the data device 26 clones the previously-entered data from the last inspection of the vehicle, step 62 (Figure 3). More particularly, because the data device 26 is in electronic communication with the server 34, the fleet data previously entered by a technician is uploaded to the server and stored. When the technician confirms that this fleet and this vehicle 10 have been inspected before in respective steps 52 and 56, the data may be returned from the server 34 to the data device 26 and thus cloned.

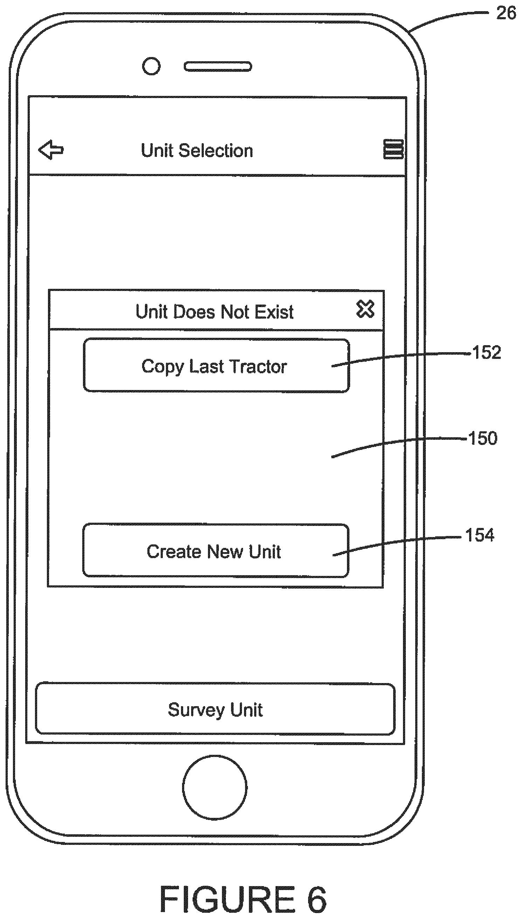

The technician may confirm confirm the prior inspection using a confirmatory screen 150 as for instance shown in Figure 6, and may select an option 152 to clone the previously-entered data, including: the fleet data, including GPS location 108 or street address 116, fleet name 110, vocation or type of fleet 112 and/or fleet contact information 114; the vehicle or unit data, including the configuration of the vehicle, target tire pressure for tires on the steer axle 126, target tread depth for tires on the steer axle 128, target tire pressure for tires on the drive axle 130, target tread depth for tires on the drive axle 132, target tire pressure for tires on each trailer axle 134, and/or target tread depth for tires on each trailer steer axle 136; and the static tire data, including tire type 140, tire size 142, any target tire pressure 144 not entered in the vehicle or unit data entry, tire valve type 146, any additional tire information 148, and/or tire ID. The technician also may have an option 154 to only clone the fleet data and may thus manually enter the vehicle or unit data and the static tire data as for instance described above in respective steps 58 and 60.

When the option 152 to clone the data is selected, the technician may review the cloned data and make any desired adjustments, step 64 (Figure 3). For example, once the data is cloned, the data device 26 preferably displays the static tire data entry screen 138, shown in Figures 7a and 7b, for review and optional adjustment or updating by the technician.

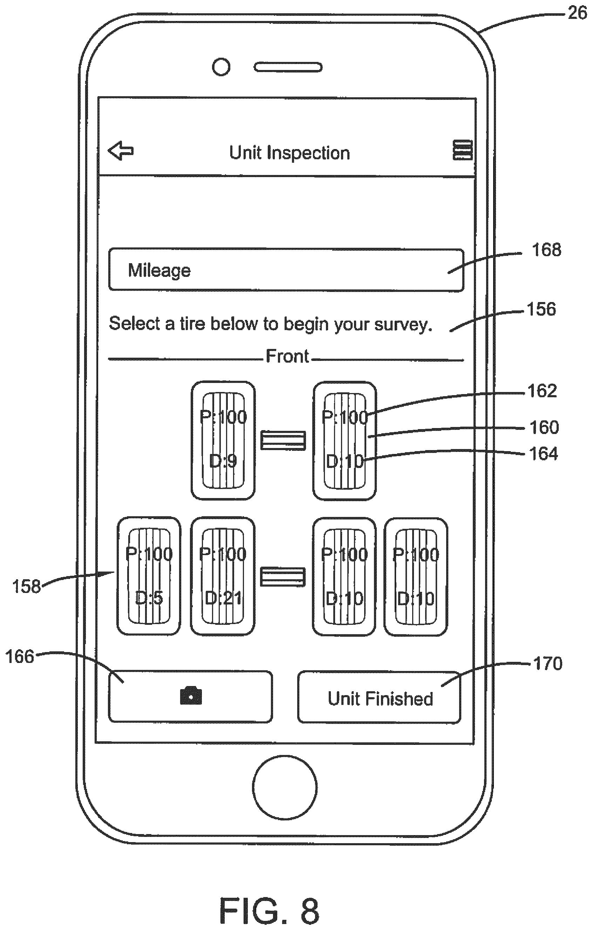

Once the static tire data has been entered pursuant to step 60, or the cloned data has been reviewed pursuant to step 64, the technician may proceed to gather the measured data for the tire 12, step 66 (Figure 3). Referring now to Figure 8, the data device 26 may display a measurement screen 156. In the measurement screen, a schematic representation of the tire configuration 158 on the vehicle 10 (Figure 1) may be displayed, which in turn may include individual tire representations 160. When an individual tire representation 160 is selected, the technician uses the portable inspection device 22 (Figure 2) as described above to measure the pressure and tread depth of the tire 12 that corresponds to the selected tire representation. Also as described above, the pressure and tread depth of the tire 12 may be wirelessly transmitted to the data device 26 and may be recorded as a measured pressure 162 and a measured tread depth 164 for the selected tire representation 160 and thus the tire 12 which corresponds to the representation.

Optionally, if the technician sees an abnormality on a tire sidewall 14 and/or tread 18, he or she may use a photo function 166. The photo function 166 actuates a camera in the data device 26 to capture an image of a tire sidewall 14 and/or tread 18 as determined by the technician. The data device 26 preferably correlates the image to the selected tire representation 160 and/or stores the image for upload to the server 34 as described above. In step 66, the technician repeats the measurement of tire pressure and tread depth for each tire 12 on the vehicle or unit 10 using each respective tire representation 160 in the tire configuration 158. The technician may optionally check and enter the vehicle or unit mileage 168 into the data device 26 as additional data to be uploaded to the server 34. The mileage entry 168 may be through an electronic interface with the vehicle 10 or manual entry by the technician.

Once multiple or all of the tires 12 on the vehicle or unit 10 have been inspected, and the tire pressure and tread depth for each loaded into the data measurement device 26, the technician acknowledges completion of the inspection for that vehicle through a unit finished function 170. Upon selection of the unit finished function 170, the technician may move on to another vehicle 10 to inspect the tires 12 of that vehicle or unit, step 68 (Figure 3). When other vehicles or units 10 are to be inspected, step 56 may be executed again, and steps 62, 64 and 66, or steps 58, 60 and 66, are repeated. When other vehicles or units 10 will not be inspected, the data in the data device 26 is uploaded to the server 34, step 70, as described above. Of course, because the data device 26 may be in electronic communication with the server 34, the data from the data device may be uploaded to the server at more frequent intervals.

Referring now to Figures 2 and 3, as described above, the server 34 stores the data that was sent or uploaded by the data device 26. In step 72, upon request, the server 34 may communicate the data to a data analysis device 36 for analysis of the data sent by the data device 26. Once the data is analyzed in step 72, recommendations and/or selected data sets may be sent in step 74 from the data analysis device 36 to the server 34 and on to the managerial device 42 for the fleet. The information received by the managerial device 42 enables any recommendations to be implemented, such as pro-active repair and/or replacement of certain tires 12. Also in step 74, selected data sets or other information may be transmitted to the data device 26 for the above-described cloning of data or other feedback to the technician, thereby enabling an easy and rapid inspection with improved data accuracy and consistency.

Another optional feature of the tire inspection system 8 includes specific geographic positioning for each tire 12 on each respective vehicle 10. More particularly, a GPS function may be employed in the data device 26 when the data device is proximate a specific tire 12 to provide a precise latitude coordinate and longitude coordinate for the position of the tire. Such geographic positioning for each tire 12 informs the technician of the location of each tire that needs to be inspected in a large lot of vehicles 10, thereby increasing the speed and efficiency of the inspection. The geographic positioning also enables multiple technicians to conduct inspections on the same fleet and coordinate their efforts, further increasing the speed and efficiency of the inspection.

An additional optional feature of the tire inspection system 8 is an automatic generation of a work list by the data device 26. As the technician inspects each tire 12, the technician may enter items to be addressed for each tire, which may be compiled into a work list by the server 34 and/or the data analysis device 36. The work list may be sent from the server 34 to the fleet managerial device 42 and/or to the data device 26. As such attention items for each tire 12 are addressed, they may be checked off on the work list using the data device 26 and/or the fleet managerial device 42. The work list enables tracking of each tire 12 inspected, as well as the number of attention items that have been addressed, what the items were, and on which tires. Such tracking enables efficient and timely servicing for the tires 12 and tracking of such servicing.

The tire inspection system 8 of the present invention thus enables manual entry of fewer parameters during the inspection of each tire 12, and is consistent, with minimal subjectivity. The system 8 is therefore efficient and accurate, and enables rapid inspection of multiple tires 12 on each vehicle 10. In this manner, the tire inspection system 8 of the present invention provides a system for the inspection of tires 12 in a fleet of vehicles 10 that includes real-time gathering of tire data and efficient management of the data, thereby enabling an easily-executed, rapid tire inspection, and which also provides objective and consistent data. The tire inspection system 8 works for any fleet, regardless of the number of vehicles 10, and does not require any special hardware in the tires 12 or on the lot. The data collected by the tire inspection system 8 may be displayed immediately to the fleet management device 42 and/or the data device 26, and may also be retained in the server 34 for historical analysis and benchmarking purposes.

The present invention also includes a method for inspecting a tire 12 of a vehicle 10 in a fleet. The method includes steps and features in accordance with the description that is presented above and shown in Figures 1 through 8.

It is emphasized that not all steps described in the detailed description of the embodiments hereinabove are mandatory for the present invention. For instance, one or more of the described steps (such as those shown in Figure 3) may be left out as long as in accordance with the claimed invention.

## Claims

1. An inspection system (8) for a tire (12) of a vehicle (10) in a fleet, the system (8) comprising:
a portable inspection device (22) including means for measuring a tire pressure, means for measuring a tread depth of the tire (12), and an antenna for wireless communication;
a hand-held data device (26) including a processor, memory and an antenna for wireless data transmission, wherein the data device (26) is adapted to receive the measured tire pressure and the measured tread depth of the tire (12) from the portable inspection device (22);
a server (34) remote from the data device (26);
a first wireless transmission means (30) to upload the measured tire pressure and the measured tread depth of the tire (12) from the data device (26) to the server (34);
an analysis device (36) in electronic communication with the server (34) for analysis of the data uploaded from the data device (26); and
a second wireless transmission means to communicate cloned data sets from the server (34) to the data device (26); wherein
the data device (26) includes a camera to capture an image of at least one of a sidewall (14) and a tread (18) of the tire (12).

2. The inspection system for a tire of a vehicle in a fleet of Claim 1, wherein the cloned data sets include at least one of fleet data, vehicle data and static tire data.

3. The inspection system for a tire of a vehicle in a fleet of Claim 1 or Claim 2, wherein the data device (26) includes at least one of:
data entry screens for manual entry of at least one of fleet data, vehicle data and static tire data; and
means for acquiring a tire identification code.

4. The inspection system for a tire of a vehicle in a fleet of one or more of the preceding claims, wherein the second wireless transmission means is adapted to communicate at least one of recommendations and selected data sets generated by the analysis device (36) from the server (34) to at least one of a managerial device (42) and the data device (26).

5. A method for inspecting a tire (12) of a vehicle (10) in a fleet, the method comprising the steps of:
determining if the inspection is a first inspection for the fleet;
if the inspection is a first inspection for the fleet, entering fleet data into a hand-held data device (26);
determining if the inspection is a first inspection for the vehicle (10);
if the inspection is a first inspection for the vehicle (10), entering vehicle data into the data device (26) and entering static tire data into the data device (26);
if the inspection is not a first inspection for the fleet and the vehicle (10), cloning previously-entered fleet data, vehicle data and static tire data on the data device;
selecting a tire representation on the data device that corresponds to the tire (12) to be inspected;
measuring an inflation pressure and a tread depth of the tire (12) to be inspected with a portable inspection device (22);
transmitting the measured inflation pressure and tread depth from the portable inspection device (22) to the data device (26);
correlating the measured inflation pressure and tread depth to the selected tire representation on the data device (26);
transmitting the fleet data, vehicle data, static tire data, the measured inflation pressure and the measured tread depth to a remote server (34);
capturing an image of at least one of a sidewall (14) and the tread (18) of the tire (12) with a camera in the data device (26) and correlating the image to the selected tire representation.

6. The method for inspecting a tire of a vehicle in a fleet of Claim 5, wherein the step of cloning the previously-entered fleet data, vehicle data and static tire data includes transmitting the previously-entered fleet data, vehicle data and static tire data from the remote server (34) to the data device (26).

7. The method for inspecting a tire of a vehicle in a fleet of Claim 5 or Claim 6, wherein the fleet data includes at least one of a geographic location, a street address, a fleet name, a fleet type and fleet contact information.

8. The method for inspecting a tire of a vehicle in a fleet of one or more of claims 5 to 7, wherein the vehicle data includes at least one of a type of axles on the vehicle (10), a number of axles on the vehicle (10), a number of tires (12) on each axle, a target inflation pressure for each tire (12), and a target tread depth for each tire (12).

9. The method for inspecting a tire of a vehicle in a fleet of one or more of claims 5 to 8, wherein the static tire data includes at least one of a tire type, tire size, a target tire inflation pressure, a tire valve type, and a tire identification code.

10. The method for inspecting a tire of a vehicle in a fleet of one or more of claims 5 to 9, further comprising the step of reviewing and adjusting the cloned data on the data device (26).

11. The method for inspecting a tire of a vehicle in a fleet of one or more of claims 5 to 10, further comprising one or more of the following steps:
repeating the measurement of inflation pressure and tread depth for each tire (12) on the vehicle (10);
locating the geographic position of the tire (10) to be inspected with a global positioning system;
generating a work list from the tire inspection using the data device (26).

12. The method for inspecting a tire of a vehicle in a fleet of one or more of claims 5 to 11, further comprising the step of analyzing the data transmitted to the remote server (34) with an analysis device (36).

13. The method for inspecting a tire of a vehicle in a fleet of Claim 12, further comprising the step of transmitting at least one of recommendations and selected data sets from the analysis device (36) to the server (34) and to at least one of a managerial device (42) and the data device (26).

## Patentansprüche

1. Inspektionssystem (8) für einen Reifen (12) eines Fahrzeugs (10) in einer Flotte, wobei das System (8) umfasst:
eine tragbare Inspektionsvorrichtung (22), die Mittel zur Messung eines Reifendrucks, Mittel zur Messung einer Profiltiefe des Reifens (12) und eine Antenne zur drahtlosen Datenübertragung enthält;
eine handgehaltene Datenvorrichtung (26), die einen Prozessor, einen Speicher und eine Antenne zur drahtlosen Datenübertragung enthält, wobei die Datenvorrichtung (26) dazu eingerichtet ist, den gemessenen Reifendruck und die gemessene Profiltiefe des Reifens (12) von der tragbaren Inspektionsvorrichtung (22) zu empfangen;
einen Server (34), der von der Datenvorrichtung (26) entfernt ist;
eine erste drahtlose Übertragungseinrichtung (30) zum Hochladen des gemessenen Reifendrucks und der gemessenen Profiltiefe des Reifens (12) von der Datenvorrichtung (26) auf den Server (34);
eine Analysevorrichtung (36) in elektronischer Kommunikation mit dem Server (34) zur Analyse der von der Datenvorrichtung (26) hochgeladenen Daten; und
eine zweite drahtlose Übertragungseinrichtung zur Kommunikation geklonter Datensätze von dem Server (34) zu der Datenvorrichtung (26); wobei
die Datenvorrichtung (26) eine Kamera zur Aufnahme eines Bildes von mindestens einem von einer Seitenwand (14) und einer Lauffläche (18) des Reifens (12) enthält.

2. Inspektionssystem für einen Reifen eines Fahrzeugs in einer Flotte nach Anspruch 1, wobei die geklonten Datensätze mindestens eines von den Flottendaten, den Fahrzeugdaten und den statischen Reifendaten enthalten.

3. Inspektionssystem für einen Reifen eines Fahrzeugs in einer Flotte nach Anspruch 1 oder Anspruch 2, wobei die Datenvorrichtung (26) mindestens eines von
Eingabemasken für die manuelle Eingabe von mindestens einem von den Flottendaten, den Fahrzeugdaten und den statischen Reifendaten und
Mitteln zum Erhalten eines Reifenidentifikationscodes enthält.

4. Inspektionssystem für einen Reifen eines Fahrzeugs in einer Flotte nach einem oder mehreren der vorhergehenden Ansprüche, wobei die zweite drahtlose Übertragungseinrichtung dazu eingerichtet ist, mindestens eines von den Empfehlungen und den durch die Analysevorrichtung (36) ausgewählten generierten Datensätzen von dem Remote-Server (34) zu mindestens einem von einer betriebswirtschaftlichen Vorrichtung (42) und der Datenvorrichtung (26) zu kommunizieren.

5. Verfahren zur Inspektion eines Reifens (12) eines Fahrzeugs (10) in einer Flotte, wobei das Verfahren die folgenden Schritte umfasst:
das Feststellen, ob es sich bei der Inspektion um eine erste Inspektion für die Flotte handelt;
wenn es sich bei der Inspektion um eine erste Inspektion für die Flotte handelt, das Eingeben von Flottendaten in eine handgehaltene Datenvorrichtung (26);
das Feststellen, ob es sich bei der Inspektion um eine erste Inspektion für das Fahrzeug (10) handelt;
wenn es sich bei der Inspektion um eine erste Inspektion für das Fahrzeug (10) handelt, das Eingeben von Fahrzeugdaten in die handgehaltene Datenvorrichtung (26) und das Eingeben statischer Reifendaten in die Datenvorrichtung (26);
wenn die Inspektion keine erste Inspektion für die Flotte und das Fahrzeug (10) ist, das Klonen zuvor eingegebenen Flottendaten, Fahrzeugdaten und statischen Reifendaten auf der Datenvorrichtung;
das Auswählen von einer Reifendarstellung auf der Datenvorrichtung, die dem zu prüfenden Reifen (12) entspricht;
das Messen von einem Reifendruck und einer Profiltiefe des mit einer tragbaren Inspektionsvorrichtung (22) zu prüfenden Reifens (12);
das Übermitteln von dem gemessenen Reifendruck und der Profiltiefe von der tragbaren Inspektionsvorrichtung (22) auf die Datenvorrichtung (26);
das Korrelieren von dem gemessenen Reifendruck und der gemessenen Profiltiefe mit der ausgewählten Reifendarstellung auf der Datenvorrichtung (26);
das Übermitteln der Flottendaten, Fahrzeugdaten, statischen Reifendaten, des gemessenen Reifendrucks und der gemessenen Profiltiefe an einen Remote-Server (34);
das Erfassen von einem Bild von mindestens einem von einer Seitenwand (14) und der Lauffläche (18) des Reifens (12) mit einer Kamera in die Datenvorrichtung (26) und das Korrelieren von dem Bild mit der ausgewählten Reifendarstellung.

6. Verfahren zur Inspektion eines Reifens eines Fahrzeugs in einer Flotte nach Anspruch 5, wobei der Schritt des Klonens der zuvor eingegebenen Flottendaten, Fahrzeugdaten und statischen Reifendaten die Übermittlung der zuvor eingegebenen Flottendaten, Fahrzeugdaten und statischen Reifendaten vom Remoteserver (34) zur Datenvorrichtung (26) enthält.

7. Verfahren zur Inspektion eines Reifens eines Fahrzeugs in einer Flotte von Anspruch 5 oder Anspruch 6, wobei die Flottendaten mindestens eines von einem geographischen Standort, einer Straßenadresse, einem Flottennamen, einem Flottentyp und Flottenkontaktinformationen umfassen.

8. Verfahren zur Inspektion eines Reifens eines Fahrzeugs in einer Flotte nach einem oder mehreren der Ansprüche 5 bis 7, wobei die Fahrzeugdaten mindestens eines von einer Art von Achsen am Fahrzeug (10), einer Anzahl von Achsen am Fahrzeug (10), einer Anzahl von Reifen (12) an jeder Achse, einem Sollreifendruck für jeden Reifen (12) und einer Sollprofiltiefe für jeden Reifen (12) enthalten.

9. Verfahren zur Inspektion eines Reifens eines Fahrzeugs in einer Flotte nach einem oder mehreren der Ansprüche 5 bis 8, wobei die statischen Reifendaten mindestens eines von einem Reifentyp, einer Reifengröße, einem Zielreifendruck, einem Reifenventiltyp und einem Reifenidentifikationscode enthalten.

10. Verfahren zur Inspektion eines Reifens eines Fahrzeugs in einer Flotte von einem oder mehreren der Ansprüche 5 bis 9, das ferner den Schritt der Überprüfung und Anpassung der geklonten Daten auf der Datenvorrichtung (26) umfasst.

11. Verfahren zur Inspektion eines Reifens eines Fahrzeugs in einer Flotte von einem oder mehreren Ansprüchen 5 bis 10, das ferner eine oder mehrere der folgenden Schritte umfasst:
das Wiederholen der Messung von Reifendruck und Profiltiefe für jeden Reifen (12) am Fahrzeug (10);
das Lokalisieren von der geographischen Position des zu inspizierenden Reifens (10) mit einem globalen Positionierungssystem;
das Erzeugen von einer Arbeitsliste aus der Reifeninspektion, wobei die Datenvorrichtung (26) dafür verwendet wird.

12. Verfahren zur Inspektion eines Reifens eines Fahrzeugs in einer Flotte nach einem oder mehreren der Ansprüche 5 bis 11, das ferner den Schritt des Analysierens der an den Remote-server (34) übermittelten Daten mit einer Analysevorrichtung (36) umfasst.

13. Verfahren zur Inspektion eines Reifens eines Fahrzeugs in einer Flotte nach Anspruch 12, das ferner den Schritt des Übermittelns von mindestens einem von Empfehlungen und ausgewählten Datensätzen von der Analysevorrichtung (36) an den Server (34) und an mindestens eines von einer Managementvorrichtung (42) und der Datenvorrichtung (26) umfasst.

## Revendications

1. Système d'inspection (8) pour un bandage pneumatique (12) d'un véhicule (10) dans une flotte, le système (8) comprenant :
un dispositif d'inspection portable (22) qui englobe un moyen destiné à mesurer une pression du bandage pneumatique, un moyen destiné à mesurer une profondeur de sculpture du bandage pneumatique (12), et une antenne pour une communication sans fil ;
un dispositif de données tenu en main (26) qui englobe un processeur, une mémoire et une antenne pour une transmission de données sans fil ; dans lequel le dispositif de données (26) est conçu pour recevoir la pression mesurée du bandage pneumatique et la profondeur de sculpture mesurée du bandage pneumatique (12) à partir du dispositif d'inspection portable (22) ;
un serveur (34) situé à distance du dispositif de données (26) ;
un premier moyen de transmission sans fil (30) destiné à télécharger la pression mesurée du bandage pneumatique et la profondeur de sculpture mesurée du bandage pneumatique (12) à partir du dispositif d'inspection portable (22) sur le serveur (34) ;
un dispositif d'analyse (36) mis en communication par voie électronique avec le serveur (34), destiné à analyser les données qui ont été téléchargées à partir du dispositif de données (26) ;
un deuxième moyen de transmission sans fil (30) destiné à communiquer des jeux de données clonées à partir du serveur (34) au dispositif de données (26) ; dans lequel
le dispositif de données (26) englobe une caméra destinée à capturer une image d'au moins un élément choisi parmi un flanc (14) et une bande de roulement (18) du bandage pneumatique (12).

2. Système d'inspection pour un bandage pneumatique d'un véhicule dans une flotte selon la revendication 1, dans lequel les jeux de données clonées englobent au moins une série de données choisies parmi des données de flotte, des données de véhicule et des données de bandage pneumatique statique.

3. Système d'inspection pour un bandage pneumatique d'un véhicule dans une flotte selon la revendication 1 ou 2, dans lequel le dispositif de données (26) englobe au moins un élément choisi parmi :
des écrans d'entrée de données destinés à entrer manuellement au moins une série de données choisies parmi des données de flotte, des données de véhicule et des données de bandage pneumatique statique ; et
un moyen destiné à l'acquisition d'un code d'identification du bandage pneumatique.

4. Système d'inspection pour un bandage pneumatique d'un véhicule dans une flotte selon une ou plusieurs des revendications précédentes, dans lequel le deuxième moyen de transmission sans fil est conçu pour communiquer au moins un des éléments choisis parmi des recommandations et des séries de données sélectionnées qui ont été générées par le dispositif d'analyse (36) à partir du serveur (34) à au moins un dispositif choisi parmi un dispositif de gestion (42) et le dispositif de données (26).

5. Procédé destiné à l'inspection d'un bandage pneumatique (12) d'un véhicule (10) dans une flotte, le procédé comprenant les étapes dans lesquelles :
on détermine le fait de savoir si l'inspection représente une première inspection pour la flotte ;
si l'inspection représente une première inspection pour la flotte, on entre des données de flotte dans un dispositif de données tenu en main (26) ;
on détermine le fait de savoir si l'inspection représente une première inspection pour le véhicule (10) ;
si l'inspection représente une première inspection pour le véhicule (10), on entre des données de véhicule dans le dispositif de données (26) et on entre des données de bandage pneumatique statique dans le dispositif de données (26) ;
si l'inspection ne représente pas une première inspection pour la flotte et pour le véhicule (10), on clone des données de flotte, des données de véhicules et des données de bandage pneumatique statique, qui ont été entrées antérieurement, dans le dispositif de données ;
on sélectionne une représentation du bandage pneumatique sur le dispositif de données, qui correspond au bandage pneumatique (12) qui doit être inspecté ;
on mesure une pression de gonflage et une profondeur de sculpture du bandage pneumatique (12) qui doit être inspecté avec un dispositif d'inspection portable (22) ;
on transmet la pression de gonflage et la profondeur de sculpture qui ont été mesurées, à partir du dispositif d'inspection portable (22) au dispositif de données (26) ;
on procède à une corrélation de la pression de gonflage et de la profondeur de sculpture qui ont été mesurées avec la représentation du bandage pneumatique qui a été sélectionné sur le dispositif de données (26) ;
on transmet les données de flotte, les données de véhicule, les données de bandage pneumatique statique, la pression de gonflage mesurée et la profondeur de sculpture mesurée à un serveur (34) situé à distance ;
on capture une image d'au moins un élément choisi parmi un flanc (14) et la bande de roulement (18) du bandage pneumatique (12) avec une caméra dans le dispositif de données (26) et on établit une corrélation entre l'image et la représentation du bandage pneumatique qui a été sélectionnée.

6. Procédé destiné à l'inspection d'un bandage pneumatique d'un véhicule dans une flotte selon la revendication 5, dans lequel l'étape dans laquelle on procède au clonage des données de flotte, des données de véhicules et des données de bandage pneumatique statique, qui ont été entrées antérieurement, englobe le fait de transmettre les données de flotte, les données de véhicule et les données de bandage pneumatique statique, qui ont été entrées antérieurement, à partir du serveur (34) situé à distance au dispositif de données (26).

7. Procédé destiné à l'inspection d'un bandage pneumatique d'un véhicule dans une flotte selon la revendication 5 ou 6, dans lequel les données de flotte englobent au moins une donnée choisie parmi une localisation géographique, une adresse postale, un nom de flotte, un type de flotte et des informations de contact de flotte.

8. Procédé destiné inspection d'un bandage pneumatique d'un véhicule dans une flotte selon une ou plusieurs des revendications 5 à 7, dans lequel les données de véhicule englobent au moins une donnée choisie parmi un type d'essieu sur le véhicule (10), un nombre d'essieux sur le véhicule (10), un nombre de bandages pneumatiques (12) sur chaque essieu, une pression de gonflage cible pour chaque bandage pneumatique (12) et une profondeur de sculpture cible pour chaque bandage pneumatique (12).

9. Procédé destiné inspection d'un bandage pneumatique d'un véhicule dans une flotte selon une ou plusieurs des revendications 5 à 8, dans lequel les données de bandage pneumatique statique englobent au moins une donnée choisie parmi un type de bandage pneumatique, une dimension de bandage pneumatique, une pression de gonflage cible du bandage pneumatique, un type de soupape du bandage pneumatique et un code d'identification du bandage pneumatique.

10. Procédé destiné inspection d'un bandage pneumatique d'un véhicule dans une flotte selon une ou plusieurs des revendications 5 à 9, qui comprend en outre l'étape dans laquelle on procède à une révision et un ajustage des données clonées sur le dispositif de données (26).

11. Procédé destiné inspection d'un bandage pneumatique d'un véhicule dans une flotte selon une ou plusieurs des revendications 5 à 10, qui comprend en outre une plusieurs des étapes ci-après dans lesquelles :
on répète la mesure de la pression de gonflage et de la profondeur de sculpture pour chaque bandage pneumatique (12) sur le véhicule (10) ;
on localise la position géographique du bandage pneumatique (10) qui doit être inspecté avec un système mondial de localisation ;
on génère une liste de tâches à effectuer à partir de l'inspection du bandage pneumatique en utilisant le dispositif de données (26).

12. Procédé destiné inspection d'un bandage pneumatique d'un véhicule dans une flotte selon une ou plusieurs des revendications 5 à 11, qui comprend en outre l'étape dans laquelle on analyse les données qui ont été transmises au serveur (34) situé à distance, avec un dispositif d'analyse (36).

13. Procédé destiné à l'inspection d'un bandage pneumatique d'un véhicule dans une flotte selon la revendication 12, qui comprend en outre l'étape dans laquelle on transmet au moins un élément choisi parmi des recommandations et des jeux de données qui ont été sélectionnées, à partir du dispositif d'analyse (36) au serveur (34) et à au moins un dispositif choisi parmi un dispositif de gestion (42) et le dispositif de données (26).
